# EUROPEAN PATENT APPLICATION

(11) **EP 4 585 981 A2**
(43) Date of publication of application: **16.07.2025**
(21) Application number: 25151273.7
(22) Date of filing: 10.01.2025
(51) Int. Cl.: G02B 6/12, G02B 6/293

(54) **RING RESONATOR SUPPORTING HIGH-ORDER GUIDED MODES**

(30) Priority: 11.01.2024 US 202463620106 P
(71) Applicant: Marvell Asia Pte Ltd, Singapore 369522 (SG)
(72) Inventor: He, Xiaoguang, Diamond Bar, CA, 91765 (US); Kato, Masaki, Palo Alto, CA, 94303 (US); Nagarajan, Radhakrishnan, 369522 Singapore (SG)
(74) Representative: Grünecker Patent- und Rechtsanwälte PartG mbB

(57) **Abstract**

An optical device includes a substrate and a single-mode optical waveguide disposed on the substrate and having a first geometrical width chosen to guide optical radiation in a first optical mode within a given wavelength range through the single-mode optical waveguide. An optical ring waveguide is disposed on the substrate and optically coupled to the single-mode optical waveguide, the optical ring waveguide having a second geometrical width wider than first geometrical width and configured to maintain therewithin optical radiation in the given wavelength range in a second optical mode different from the first optical mode.

## Description

### CROSS-REFERENCE TO RELATED APPLICATION

This application claims the benefit of U.S. Provisional Patent Application 63/620,106, filed January 11, 2024, which is incorporated herein by reference.

### FIELD OF THE INVENTION

The present invention relates generally to optoelectronic devices, and particularly to optical guided wave ring resonators.

### BACKGROUND

A ring resonator, comprising an optical ring waveguide, is used as an element in photonic integrated circuits (PICs), for example in comb filters, bandpass filters, wavelength tuners, modulators and transceivers. Silicon-based photonic integrated circuits (PICs) are especially well suited to benefit from the use of ring resonators. A ring resonator is commonly coupled by evanescent coupling to one or more bus waveguides, wherein the field of a guided optical wave in one bus waveguide is coupled to the ring resonator and then from the ring resonator back to the same or to another bus waveguide. Due to the resonant property of the ring resonator, the intensity of the optical field within the circular optical waveguide exhibits sharp resonant peaks as a function of the wavelength of the field.

The terms "optical radiation" and "optical waves," as used in the present description and in the claims, refer generally to any and all of visible, infrared and ultraviolet radiation.

### SUMMARY

Embodiments of the present invention that are described hereinbelow provide improved designs and applications of optical ring resonators.

There is therefore provided, in accordance with an embodiment described herein, an optical device, including a substrate and a single-mode optical waveguide disposed on the substrate and having a first geometrical width chosen to guide optical radiation in a first optical mode within a given wavelength range through the single-mode optical waveguide. An optical ring waveguide is disposed on the substrate and optically coupled to the single-mode optical waveguide, the optical ring waveguide having a second geometrical width wider than first geometrical width and configured to maintain therewithin optical radiation in the given wavelength range in a second optical mode different from the first optical mode.

In some embodiments, the first optical mode includes a TE00 mode, and the second optical mode is a TE0n mode, wherein n ≥ 1. In disclosed embodiments, n ≥ 2 or n ≥ 3.

In a disclosed embodiment, the optical ring waveguide has a length selected to maintain a standing wave in the second optical mode at one or more resonant wavelengths in the given wavelength range.

Additionally or alternatively, the substrate includes silicon on insulator (SOI) and wherein the single-mode optical waveguide and the optical ring waveguide include silicon nitride (SiN).

In the disclosed embodiments, the optical ring waveguide is coupled to the single-mode optical waveguide by a coupler selected from a group of couplers consisting of a straight coupler, a bend coupler, and an adiabatic coupler.

Additionally or alternatively, for a wavelength À in the given wavelength range, the first width is smaller than 0.3×λ and the second width is greater than 0.3×λ. In a disclosed embodiment, the second width is greater than 0.5×λ. Typically, when the given wavelength range is between 1.27 µm and 1.32 µm, the second width exceeds 0.4 µm.

There is also provided, in accordance with an embodiment disclosed herein, an optical filter, including a substrate and first and second single-mode optical waveguides disposed on the substrate and coupled together to define a Mach-Zehnder interferometer. The first and second single-mode optical waveguides have a first width chosen to guide optical radiation in a given wavelength range in a TE00 mode propagating through the single-mode optical waveguides. An optical ring waveguide is disposed on the substrate and optically coupled to the first single-mode optical waveguide, and having a second width chosen to maintain a standing wave within the optical ring waveguide at a resonant wavelength in the given wavelength range in a TE0n mode, wherein n ≥ 1.

There is additionally provided, in accordance with an embodiment disclosed herein, an optical communication device, including an optical gain medium configured to amplify optical radiation within a given wavelength range and first and second reflectors disposed on opposing sides of the optical gain medium to define an optical cavity containing the gain medium. A single-mode optical waveguide is coupled in series with the optical gain medium in the optical cavity and having a first geometrical width chosen to guide optical radiation in the given wavelength range in a first optical mode through the single-mode optical waveguide. An optical ring waveguide is optically coupled to the single-mode optical waveguide and having a second geometrical width wider than first geometrical width and configured to maintain therewithin optical radiation in the given wavelength range in a second optical mode different from the first optical mode.

In a disclosed embodiment, the gain medium includes a semiconductor junction.

Additionally or alternatively, the optical gain medium is coupled to transmit outgoing optical radiation through the second reflector to a communication link, and the optical communication device includes a receiver configured to receive and detect incoming optical radiation from the communication link.

The present invention will be more fully understood from the following detailed description of the embodiments thereof, taken together with the drawings in which:

### BRIEF DESCRIPTION OF THE DRAWINGS

Fig. 1 is a schematic top view of an optical filter, in accordance with an embodiment described herein;
Figs. 2A-2C are schematic top views of optical ring waveguides coupled to respective bus waveguides, in accordance with embodiments described herein;
Fig. 3 is a schematic top view of an optical ring waveguide coupled to a bus waveguide, in accordance with another embodiment described herein;
Fig. 4 is a plot showing simulated values of a coupling coefficient as a function of the width of an optical ring waveguide, in accordance with an embodiment described herein; and
Fig. 5 a schematic top view of an optical communication device, in accordance with an embodiment described herein.

### DETAILED DESCRIPTION OF EMBODIMENTS

Ring resonators, comprising an optical ring waveguide, are commonly used in PICs. In most PICs, the ring resonator waveguides are designed for single-mode operation in the TE00 mode. When a ring resonator is coupled to a bus waveguide, the power of the optical field within the ring tends to be much higher than that within the bus waveguide. Specifically, the narrower the resonant peaks within the ring, the higher the power of the optical field. When used in silicon photonic circuits, the power inside the ring is limited by non-linear two-photon absorption (TPA) of the silicon waveguide, thus limiting the overall power capacity of the PIC.

Some embodiments of the present invention that are described herein provide an improved design of the optical ring resonator that permits a higher power of the optical guided wave circulating in the bus waveguide by making the ring waveguide geometrically wider than the single-mode bus waveguide. Specifically, while the bus waveguide continues to operate in the desirable TE00 mode, the ring waveguide is wide enough to support higher-order modes, specifically TE0n modes, with n ≥ 1, such as TE01, TE02, TE03, and so on. The length of the optical ring waveguide is selected to maintain a standing wave in the higher-order mode at one or more resonant wavelengths in a given wavelength range.

The optical ring resonator is designed and coupled to the bus waveguide so that these higher-order modes couple efficiently to the basic TE00 mode propagating in the bus waveguide. The higher-order mode in the ring waveguide lowers the peak power of the mode relative to that of a TE00 mode, thus overcoming the problem of TPA while supporting a high-power TE00 mode in the bus waveguide. The coupling between the bus waveguide and the wide ring waveguide can be through a bend coupler, straight coupler, or adiabatic coupler, for example.

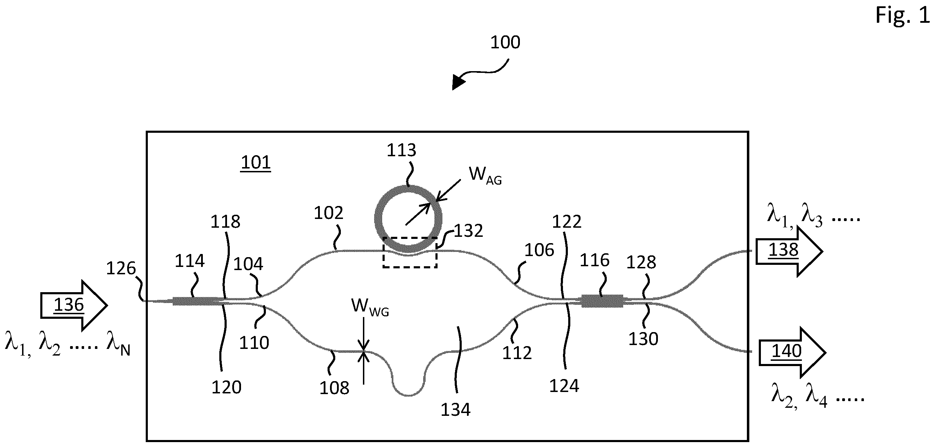

Fig. 1 is a schematic top view of an optical filter 100, in accordance with an embodiment described herein. Optical filter 100 comprises a substrate 101, such as silicon-on-insulator (SOI), on which are disposed a first waveguide 102 with a respective first end 104 and second end 106, a second waveguide 108 with a respective first end 110 and second end 112, and an optical ring waveguide 113 forming a ring resonator. Optical ring waveguide 113 has the form of a circular annulus in the pictured embodiment. Alternatively, the optical ring waveguide may have substantially any other suitable shape, for example, a square or rectangle with suitably rounded corners, a "racetrack" form with two straight parts connected by two circular arcs, or a more general shape comprising one or more portions of an Euler spiral, wherein the curvature of the spiral changes linearly with the length along the spiral. First and second waveguides 102 and 108, as well as ring waveguide 113, commonly comprise silicon nitride (SiN), although other suitable materials can alternatively be used.

First ends 104 and 110 are joined together by an input coupler 114, while second ends 106 and 112 are joined together by an output coupler 116. In the present example, input coupler 114 comprises a 1×2 multi-mode interferometer (MMI) with two outputs 118 and 120 coupled to respective first ends 104 and 110. (MMIs, known to those skilled in optical guided wave technology, comprise broad optical waveguides with multiple inputs and outputs, such as a 1×2 MMI with one input and two outputs or a 2×2 MMI with two inputs and two outputs.) Output coupler 116 comprises a 2×2 MMI with two inputs 122 and 124 coupled to respective second ends 106 and 112. MMI 114 comprises an input 126, and MMI 116 comprises two outputs 128 and 130, defining the respective inputs and outputs of optical filter 100.

In the present embodiment, waveguides 102 and 108 have values of geometrical width WWG and height HWG that are selected to maintain guided optical waves with a wavelength λ in a certain range, for example 1.25 µm < λ < 1.35 µm, only in the lowest-order transverse mode TE00. For the stated wavelength range, this requirement typically limits the width to values smaller than about 0.3×λ, meaning WWG < 0.4 µm in the present example. Typically values of the height HWG are between 0.2 µm and 1 µm, although other heights may also be used. For other ranges of wavelengths, these dimensions scale with the wavelength.

Ring waveguide 113, as opposed to waveguides 102 and 108, has a similar height HAG ≅ HWG but has a larger value of width WAG to support transverse modes of higher order, such as TE01, TE02, TE03, and possibly higher. In the present embodiment, ring waveguide 113 is optically coupled to first waveguide 102 through a bend coupler 132, within which the ring waveguide and the first waveguide are parallel and adjacent to each other, with a sufficiently small separation to facilitate coupling between them through evanescent waves. The strength of the optical coupling between ring waveguide 113 and first waveguide 102 is denoted by a coupling coefficient κ2.

The two waveguides 102 and 108, ring waveguide 113, and MMIs 114 and 116 form a ring-assisted Mach-Zehnder interferometer (RAMZI) 134. The performance of optical filter 100 is determined by the coupling coefficient κ2, the waveguide length difference Δd between waveguides 102 and 108, and the length L of ring waveguide 113. Further details of a device of this sort are described in U.S. Patent Application 18/910,001, filed October 9, 2024, whose disclosure is incorporated herein by reference. By appropriate choice of parameters, filter 100 can be configured to function as a wavelength separator. Thus, when a comb of wavelengths λ1, λ2,... λN is received at input 126, as shown by an arrow 136, odd-indexed wavelengths λ1, λ3,... of the comb exit at output 128, shown by an arrow 138, and even-indexed wavelengths λ2, λ4,... of the comb exit at output 130, shown by an arrow 140.

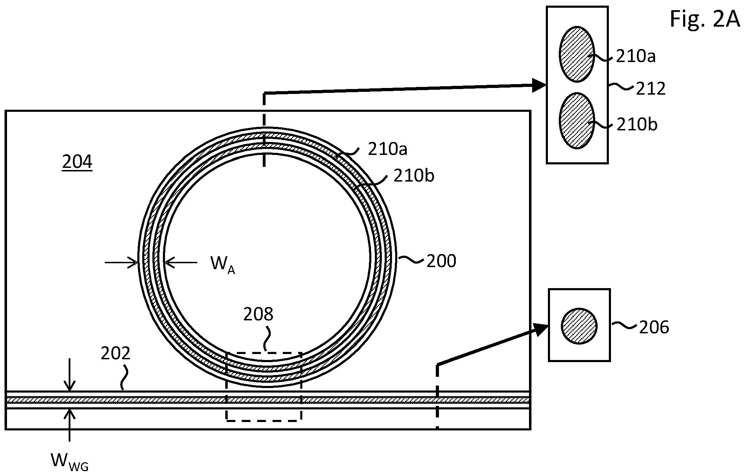

Figs. 2A-2C are schematic top views of optical devices comprising optical ring waveguides 200, 220 and 240 coupled to respective bus waveguides 202, 222 and 242, in accordance with embodiments described herein. In the present embodiments, optical ring waveguides 200, 220 and 240 are shaped as circular rings, and bus waveguides 202, 222 and 242 are straight waveguides. In alternative embodiments, other shapes for optical ring waveguides 200, 220 and 240 can be used, as described hereinabove. Furthermore, bus waveguides 202, 222 and 242 can be curved and can comprise bent couplers.

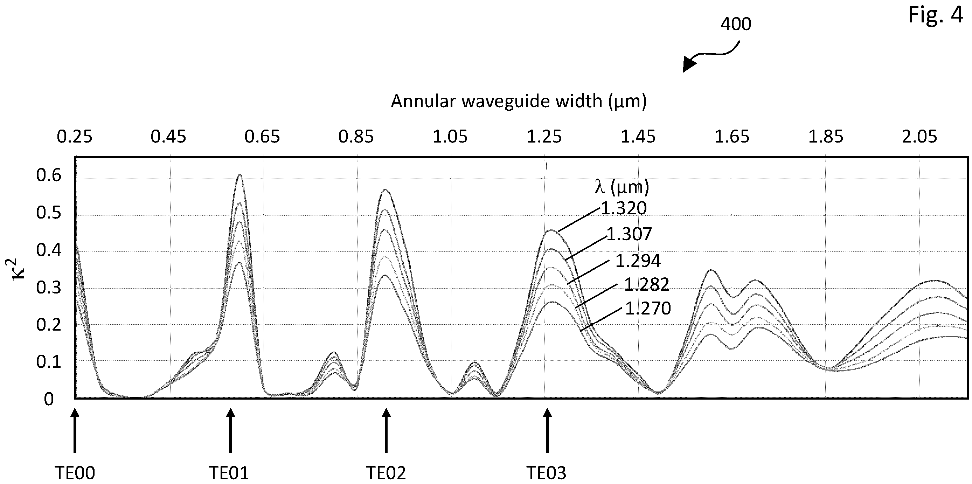

Fig. 2A is a top view of an optical ring waveguide 200 and a straight bus waveguide 202, disposed on a substrate 204. A guided optical wave propagates in bus waveguide 202, whose geometrical width WWG has been selected so that only a basic mode TE00 propagates in the waveguide. A schematic cross-section of the TE00 mode is shown in an inset 206, showing a single lobe (maximum of optical power). Within a coupler 208, bus waveguide 202 and ring waveguide 200 are in sufficient proximity to couple the guided wave propagating in the bus waveguide to the ring waveguide and vice versa. The geometrical width WA of ring waveguide 200 is selected so that the guided wave propagating within the ring waveguide assumes a TE01 mode structure with two lobes 210a and 210b, shown schematically in the top view and as a schematic cross-section in an inset 212. (The widths of waveguides supporting higher-order modes are further detailed in Fig. 4 hereinbelow.)

As the portion of bus waveguide 202 within coupler 208 is straight, the coupler is called a straight coupler. As the optical power in ring waveguide 200 with a width WA spreads into a TE01 mode that is broader than the TE00 mode, a higher level of total optical power can be maintained in the ring waveguide as compared to a narrower ring waveguide supporting only a TE00 mode. This, in turn, permits a higher level of optical power to propagate in bus waveguide 202, without a danger of TPA in ring waveguide 200.

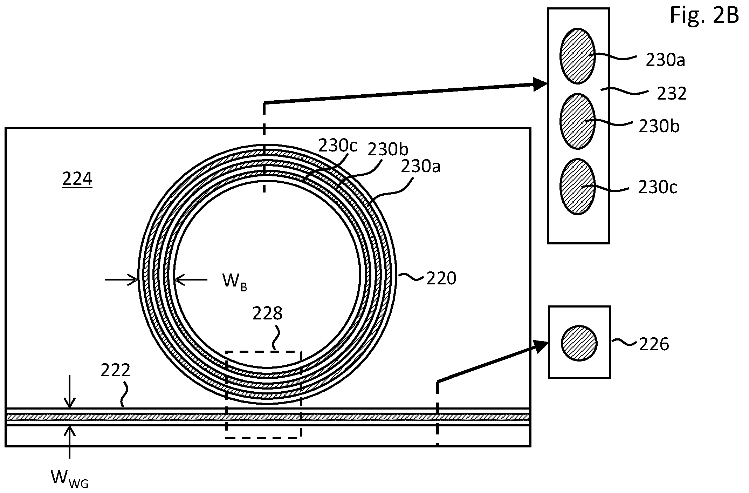

Fig. 2B is a top view of an optical ring waveguide 220 and a straight bus waveguide 222, disposed on a substrate 224. The embodiment depicted in Fig. 2B is similar to that depicted in Fig. 2A, with the difference that ring waveguide 220 is broader than ring waveguide 200, i.e., the geometrical width WB is larger than WA. Bus waveguide 222 is identical to bus waveguide 202, with a width WWG and a TE00 mode structure, as shown schematically in an inset 226.

The guided optical wave, propagating in bus waveguide 222 as a TE00 mode, is coupled by a straight coupler 228 into ring waveguide 220, where it propagates as a TE02 mode. The TE02 mode has three lobes 230a, 230b and 230c, as shown schematically in the top view and in a cross-section shown in an inset 232.

Due to the spread of the TE02 mode, which is broader than the TE01 mode (Fig. 2A), ring waveguide 220 permits an even higher optical power than ring waveguide 200.

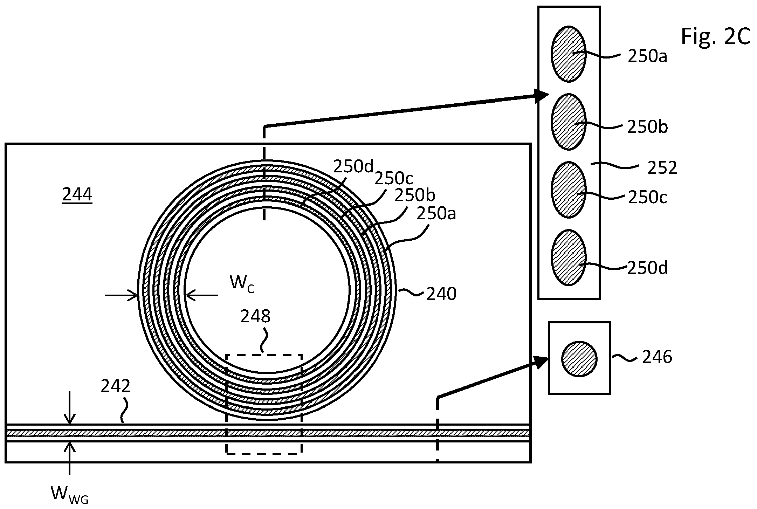

Fig. 2C is a top view of an optical ring waveguide 240 and a straight bus waveguide 242, disposed on a substrate 244. The embodiment in Fig. 2C is similar to those in Figs. 2A and 2B, with the difference that the ring waveguide width WC is sufficiently broad to maintain a TE03 mode. Thus, a TE00 mode propagating in a bus waveguide 242 (identical to waveguides 202 and 222) and shown schematically in an inset 246, is coupled by a straight coupler 248 into a TE03 mode in ring waveguide 240. The TE03 mode has four lobes 250a, 250b, 250c and 250d, shown schematically in the top view, as well as in an inset 252.

As the TE03 mode spreads more widely than the TE01 and TE02 modes, ring waveguide 240 may carry even more optical power than ring waveguides 200 and 220 without the negative effects of TPA.

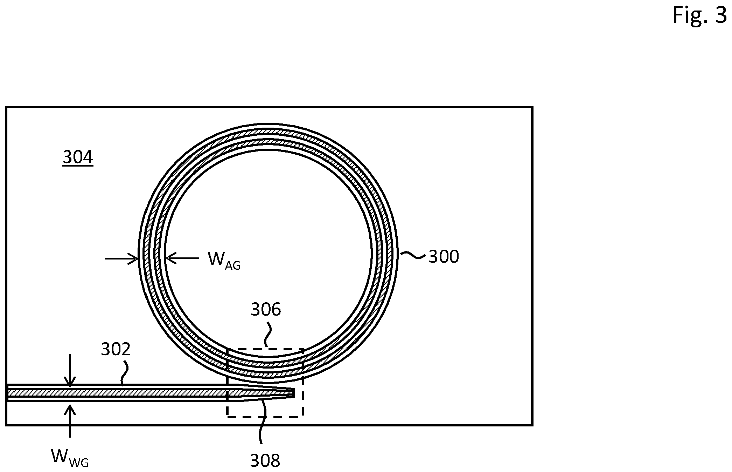

Fig. 3 is a schematic top view of an optical ring waveguide 300 coupled to a bus waveguide 302, in accordance with another embodiment described herein.

Ring waveguide 300 and bus waveguide 302 are disposed on a substrate 304. Ring waveguide 300 has a geometrical width WAG selected so that the waveguide maintains a TE01 mode (similarly to ring waveguide 200 in Fig. 2A.) Bus waveguide 302 comprises two parts: Outside of an adiabatic coupler 306, it has a geometrical width WWG such that it maintains a TE00 mode (similarly to bus waveguides 202, 222 and 242 in respective Figs. 2A, 2B and 2C), whereas within coupler 306 its width reduces in a taper 308, which is in close proximity to ring waveguide 300. The change in the width of bus waveguide 302 within taper 308 is sufficiently slow along the bus waveguide so that the TE00 mode in the bus waveguide is transferred into a TE01 mode in ring waveguide 300 without losses and with a high efficiency. Such a lossless coupling is called "adiabatic coupling," hence the term adiabatic coupler.

Fig. 4 is a plot 400 showing simulated curves of the coupling coefficient κ2 as a function of the width of an ring waveguide, in accordance with an embodiment described herein.

Plot 400 shows five curves of κ2 as a function of the width of an ring waveguide for five respective wavelengths λ in the range 1.270 µm ≤ λ ≤ 1.320 µm, as labeled in the plot. In the simulations, the following parameters were used: The height of the SOI substrate was 0.22 pm, the width of the bus waveguide was 0.25 pm, and the gap between the bus waveguide and the ring waveguide was 0.25 µm. The peaks of the curves correspond to specific modes of the guided wave within the ring waveguide, with the modes from TE00 to TE03 labeled in plot 400. The positions of the peaks on the horizontal (width) axis, as well as the width corresponding to the zero value of κ2 between TE00 and TE01 are given in Table 1, below.

**Table 1: Ring waveguide width at peaks for κ² for modes TE00...TE03 and κ² = 0.**

| Mode | Ring waveguide width (µm) at peak |
|---|---|
| TE00 | 0.25 |
| TE01 | 0.60 |
| TE02 | 0.91 |
| TE03 | 1.27 |
| κ² = 0 | 0.37 |

As the respective positions of the peaks on the horizontal axis are a weak function of the wavelength, Table 1 shows average positions. The position of the value κ2 = 0 at 0.37 µm signifies the width of waveguide below which only the TE00 mode can propagate and above which higher order modes TE0n (n ≥ 1) can propagate. (This value may be rounded off to 0.4 µm or even to 0.5 µm to ensure the propagation of higher-order modes.) As the width of the ring waveguide for specific modes scales with wavelength λ, the width for the value κ2 = 0 can be generalized as 0.3×λ.

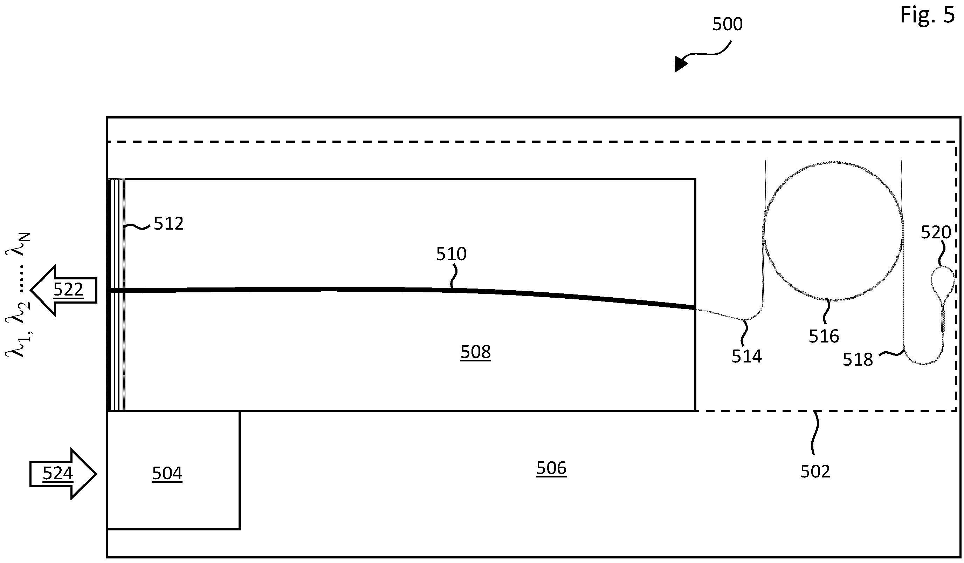

Fig. 5 a schematic top view of an optical communication device 500, in accordance with an embodiment described herein.

Communication device 500 functions as an optical transceiver, comprising a transmitter 502 and a receiver 504 disposed on a substrate 506 and coupled to an optical communication link (not shown). Transmitter 502 comprises an optical gain medium 508 with an internal waveguide 510 and a partial reflector 512, a first external waveguide 514, an ring waveguide 516, a second external waveguide 518 and a high-reflectance waveguide reflector 520. Waveguides 510, 514 and 518 are single-mode waveguides, with geometrical widths for maintaining a TE00 mode, while ring waveguide 516 has a larger geometrical width for maintaining a high-order mode, similarly to one of ring waveguides 200, 220 and 240 (Figs. 2A, 2B and 2C, respectively). First external waveguide 514 is coupled to internal waveguide 510 and to ring waveguide 516, and second external waveguide 518 is coupled to ring waveguide 516 and to reflector 520. Partial reflector 512 and high-reflectance reflector 520 define an optical cavity containing gain medium 508.

Optical gain medium 508 amplifies optical radiation within the wavelength range of communication device 500. For this purpose, optical gain medium 508 may comprise, for example, a suitable semiconductor junction or another optically active material. Optical gain medium 508 is coupled to transmit outgoing optical radiation via internal waveguide 510 through reflector 512 to the communication link. Due to the resonant behavior of ring waveguide 516, the radiation within the optical cavity is maintained at N discrete wavelengths l1, l2,... lN, wherein N is a positive integer. A portion of the radiation within the cavity exits as a comb of optical radiation through partial reflector 512 as shown by an arrow 522.

As previously described in Figs. 2A-2C, the spreading of the optical power from the TE00 mode in waveguides 510, 514 and 518 into a higher-order mode in ring waveguide 516 permits employing higher optical powers in the single-mode waveguides than if the ring waveguide were also dimensioned for a TE00 mode. This allows driving source 502 at a similarly higher power without a danger of TPA in ring waveguide 516.

Receiver 504 receives and detects incoming optical radiation received by communication device 500 from the communication link, as shown by an arrow 524.

It will be appreciated that the embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art.

### The following is a list of further preferred embodiments of the invention:

Embodiment 1. An optical device, comprising:
   a substrate;
   a single-mode optical waveguide disposed on the substrate and having a first geometrical width chosen to guide optical radiation in a first optical mode within a given wavelength range through the single-mode optical waveguide; and
   an optical ring waveguide disposed on the substrate and optically coupled to the single-mode optical waveguide, the optical ring waveguide having a second geometrical width wider than first geometrical width and configured to maintain therewithin optical radiation in the given wavelength range in a second optical mode different from the first optical mode.
Embodiment 2. The optical device according to embodiment 1, wherein the first optical mode comprises a TE00 mode, and wherein the second optical mode is a TE0n mode, wherein n ≥ 1.
Embodiment 3. The optical device according to embodiment 2, wherein n ≥ 2.
Embodiment 4. The optical device according to embodiment 3, wherein n ≥ 3.
Embodiment 5. The optical device according to embodiment 1, wherein the optical ring waveguide has a length selected to maintain a standing wave in the second optical mode at one or more resonant wavelengths in the given wavelength range.
Embodiment 6. The optical device according to embodiment 1, wherein the substrate comprises silicon on insulator (SOI) and wherein the single-mode optical waveguide and the optical ring waveguide comprise silicon nitride (SiN).
Embodiment 7. The optical device according to embodiment 1, wherein the optical ring waveguide is coupled to the single-mode optical waveguide by a coupler selected from a group of couplers consisting of a straight coupler, a bend coupler, and an adiabatic coupler.
Embodiment 8. The optical device according to embodiment 1, wherein for a wavelength λ in the given wavelength range, the first width is smaller than 0.3×λ and the second width is greater than 0.3×λ.
Embodiment 9. The optical device according to embodiment 8, wherein the second width is greater than 0.5×λ.
Embodiment 10. The optical device according to embodiment 8, wherein the given wavelength range is between 1.27 µm and 1.32 µm, and the second width exceeds 0.4 µm.
Embodiment 11. An optical filter, comprising:
   a substrate;
   first and second single-mode optical waveguides disposed on the substrate and coupled together to define a Mach-Zehnder interferometer, the first and second single-mode optical waveguides having a first width chosen to guide optical radiation in a given wavelength range in a TE00 mode propagating through the single-mode optical waveguides; and
   an optical ring waveguide disposed on the substrate and optically coupled to the first single-mode optical waveguide, and having a second width chosen to maintain a standing wave within the optical ring waveguide at a resonant wavelength in the given wavelength range in a TE0n mode, wherein n ≥ 1.
Embodiment 12. An optical communication device, comprising:
   an optical gain medium configured to amplify optical radiation within a given wavelength range;
   first and second reflectors disposed on opposing sides of the optical gain medium to define an optical cavity containing the gain medium;
   a single-mode optical waveguide coupled in series with the optical gain medium in the optical cavity and having a first geometrical width chosen to guide optical radiation in the given wavelength range in a first optical mode through the single-mode optical waveguide; and
   an optical ring waveguide optically coupled to the single-mode optical waveguide and having a second geometrical width wider than first geometrical width and configured to maintain therewithin optical radiation in the given wavelength range in a second optical mode different from the first optical mode.
Embodiment 13. The optical communication device according to embodiment 1, wherein the first optical mode comprises a TE00 mode, and wherein the second optical mode is a TE0n mode, wherein n ≥ 1.
Embodiment 14. The optical communication device according to embodiment 12, wherein the optical ring waveguide has a length chosen to maintain a standing wave in the second optical mode within the optical ring waveguide at a resonant wavelength in the given wavelength range.
Embodiment 15. The optical communication device according to embodiment 12, wherein the gain medium comprises a semiconductor junction.
Embodiment 16. The optical communication device according to embodiment 12, wherein the optical gain medium is coupled to transmit outgoing optical radiation through the second reflector to a communication link, and wherein the optical communication device comprises a receiver configured to receive and detect incoming optical radiation from the communication link.

## Claims

1. An optical device, comprising:
a substrate;
a single-mode optical waveguide disposed on the substrate and having a first geometrical width chosen to guide optical radiation in a first optical mode within a given wavelength range through the single-mode optical waveguide; and
an optical ring waveguide disposed on the substrate and optically coupled to the single-mode optical waveguide, the optical ring waveguide having a second geometrical width wider than first geometrical width and configured to maintain therewithin optical radiation in the given wavelength range in a second optical mode different from the first optical mode.

2. The optical device according to claim 1, wherein the first optical mode comprises a TE00 mode, and wherein the second optical mode is a TE0n mode, wherein n ≥ 1.

3. The optical device according to claim 2, wherein n ≥ 2.

4. The optical device according to claim 3, wherein n ≥ 3.

5. The optical device according to claim 1, wherein the optical ring waveguide has a length selected to maintain a standing wave in the second optical mode at one or more resonant wavelengths in the given wavelength range.

6. The optical device according to claim 1, wherein the substrate comprises silicon on insulator (SOI) and wherein the single-mode optical waveguide and the optical ring waveguide comprise silicon nitride (SiN).

7. The optical device according to claim 1, wherein the optical ring waveguide is coupled to the single-mode optical waveguide by a coupler selected from a group of couplers consisting of a straight coupler, a bend coupler, and an adiabatic coupler.

8. The optical device according to claim 1, wherein for a wavelength λ in the given wavelength range, the first width is smaller than 0.3×λ and the second width is greater than 0.3×λ.

9. The optical device according to claim 8, wherein the second width is greater than 0.5×λ.

10. The optical device according to claim 8, wherein the given wavelength range is between 1.27 µm and 1.32 µm, and the second width exceeds 0.4 µm.

11. An optical filter, comprising:
a substrate;
first and second single-mode optical waveguides disposed on the substrate and coupled together to define a Mach-Zehnder interferometer, the first and second single-mode optical waveguides having a first width chosen to guide optical radiation in a given wavelength range in a TE00 mode propagating through the single-mode optical waveguides; and
an optical ring waveguide disposed on the substrate and optically coupled to the first single-mode optical waveguide, and having a second width chosen to maintain a standing wave within the optical ring waveguide at a resonant wavelength in the given wavelength range in a TE0n mode, wherein n ≥ 1.

12. An optical communication device, comprising:
an optical gain medium configured to amplify optical radiation within a given wavelength range;
first and second reflectors disposed on opposing sides of the optical gain medium to define an optical cavity containing the gain medium;
a single-mode optical waveguide coupled in series with the optical gain medium in the optical cavity and having a first geometrical width chosen to guide optical radiation in the given wavelength range in a first optical mode through the single-mode optical waveguide; and
an optical ring waveguide optically coupled to the single-mode optical waveguide and having a second geometrical width wider than first geometrical width and configured to maintain therewithin optical radiation in the given wavelength range in a second optical mode different from the first optical mode.

13. The optical communication device according to claim 1, wherein the first optical mode comprises a TE00 mode, and wherein the second optical mode is a TE0n mode, wherein n ≥ 1.

14. The optical communication device according to claim 12, wherein the optical ring waveguide has a length chosen to maintain a standing wave in the second optical mode within the optical ring waveguide at a resonant wavelength in the given wavelength range.

15. The optical communication device according to claim 12, wherein the gain medium comprises a semiconductor junction, or
wherein the optical gain medium is coupled to transmit outgoing optical radiation through the second reflector to a communication link, and wherein the optical communication device comprises a receiver configured to receive and detect incoming optical radiation from the communication link.
